# EUROPEAN PATENT APPLICATION

(11) **EP 0 887 003 A1**
(43) Date of publication of application: **30.12.1998**
(21) Application number: 97304663.4
(22) Date of filing: 27.06.1997
(51) Int. Cl.: A01C 1/04, A01G 31/06

(54) **Method and apparatus for the cultivation of plants**

(71) Applicant: Ko, Wen Tsan, Chu Pei City, Hsin Chu Hsien (TW)
(72) Inventor: Ko, Wen Tsan, Chu Pei City, Hsin Chu Hsien (TW)
(74) Representative: Woodward, John Calvin

(57) **Abstract**

A method and apparatus is disclosed which is particularly suitable for the DIY cultivation of plants and vegetables using a water soluble membrane (10) to which seeds are attached. The membrane (10) is preferably made of paper and placed over a container (20) containing an organic growing medium (22). It is then watered sufficiently to cause the paper membrane (10) to disintegrate and dissolve thereby allowing the seeds and fertiliser therein to fall naturally into said soil. Means can also be provided to vary the temperature inside the box to a temperature suitable for the growth of the plants and also to promote growth and accelerate harvesting thereof.

## Description

This invention relates to a method and apparatus for cultivating plants and more particularly but not exclusively, to an apparatus for the DIY cultivation of organic vegetables, which allows them to grow normally merely by watering them properly without the need for any other activity such as sowing, loosening the soil, fertilising and the like.

Most conventional planting methods require several steps including loosening the soil, sowing, fertilising, killing insects, harvesting and the like, with other steps interposed such as watering, weeding and the like. However, with increasing requirements regarding health and environmental protection, there is a need to be able to grow healthy environmental, pesticide-free, non-toxic, residual chemical agent-free organic plants or vegetables. To this end, home grown plants and vegetables are becoming increasingly popular. Although home grown vegetables effectively avoid pesticide pollution, they still need a lot of work such as loosening the soil, fertilising and the like. In particular, since the amount of fertiliser used directly affects the growth of the plants, it can be difficult for a new learner who has no knowledge of agriculture to know how to effectively control the timing of fertilising and the amount of fertiliser needed for the normal growth of the plants. Furthermore, there is the drawback that the growth of the plants is not completely subject to effective controls in respect of the timing of harvesting, resulting in irregular harvesting and not being able to enjoy fresh vegetables at any time.

Further, conventional sowing and fertilising generally is done by spreading the seeds or fertiliser manually over the soil which not only dirties the users hands but also the seeds and fertiliser are often not evenly spread over or into the soil which results in uneven growth.

It is therefore an object of the invention to provide a method and apparatus which overcomes or substantially reduces the aforementioned disadvantages and which is particularly suitable for the DIY grower.

According to one aspect of the invention, the present invention overcomes the problems of the prior art by providing a plant growing medium characterised by a water soluble layer to which a plurality of seeds is attached.

The plant growing medium preferably has retaining means thereon and a second layer attached to the first layer by the retaining means to encapsulate the seeds between the two layers.

Suitably, the retaining means is arranged on the first layer in a matrix providing a plurality of individual cells, one or more seeds being located in each cell.

Preferably, the or each layer is paper but any other water soluble material can be used.

The retaining means can either be an adhesive or an organic fertiliser or a combination of both.

The water soluble plant growing medium can be in the form of an adherent layer made of flour, starch and dextrin made by boiling it and forming it into a paste to which the seeds can be attached.

According to another aspect of the invention there is provided a method for the DIY cultivation of organic vegetables characterised filling a cultivation container with an organic growing medium and placing a water soluble membrane with seeds attached thereto on the top surface of said growing medium, wetting the membrane sufficiently with water for it to disintegrate whereby the seeds drop into the organic growing medium to grow normally by subsequently just watering continuously.

The preferred apparatus for the DIY cultivation of organic plants or vegetables comprises a vegetable seed paper membrane and a cultivating box containing a proper amount of organic soil or organic medium. The paper membrane preferably has vegetable seeds and fertiliser adhered thereto and is laid directly over the surface of the organic soil or organic medium and is disintegrated by wetting it with sufficient water to enable the vegetable seeds and fertiliser therein to fall into the soil naturally so that the fertiliser can supply the nutrients needed for the growth of the vegetable seeds so the vegetables will grow normally by just properly supplying water continuously to them thereby avoiding the inconvenience of having to fertilise separately.

A layer of fibre can also be provided in the bottom of the cultivating box to preserve humidity and gas penetrability, as well as enabling the roots of the vegetables to penetrate deeply therein so as to be fixed strongly.

Furthermore, a screen cover can be provided outside of the cultivating box, which screen cover is made of a fine mesh material to provide functions such as venting, protection against insects and resistance to damage caused by heavy rain thereby providing a good environment and conditions for growing the plants. In addition, a lamp can be provided inside the screen cover as well as a temperature adjusting means fitted inside the cultivating box so that the correct temperature suitable for optimum growth can be achieved or it can be accelerated to enhance and increase the growth and harvest of the plants.

The invention will now be described, by way of example only, with reference to the accompanying drawings, in which:
Figure 1 is an exploded view of a cultivating container for use with the present invention;
Figure 2 shows a plurality of cultivating containers shown in Figure 1 assembled into a stack suitable for the DIY cultivation of organic vegetables;
Figure 3 is a plan view of the cultivating container shown in Figures 1 and 2;
Figure 4 is a scrap view of part of a plant growing medium for use with the present invention; and
Figure 5 shows an alternative embodiment of the present invention.

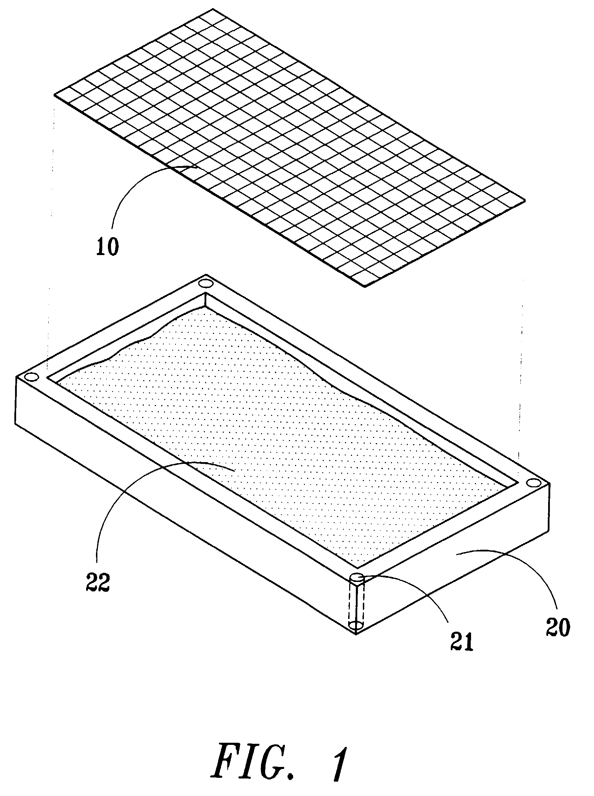

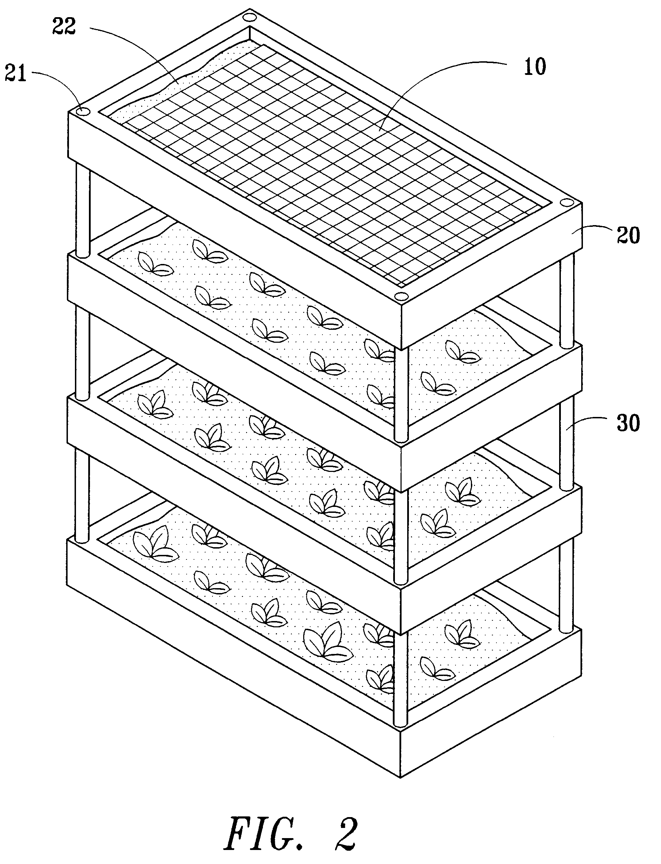

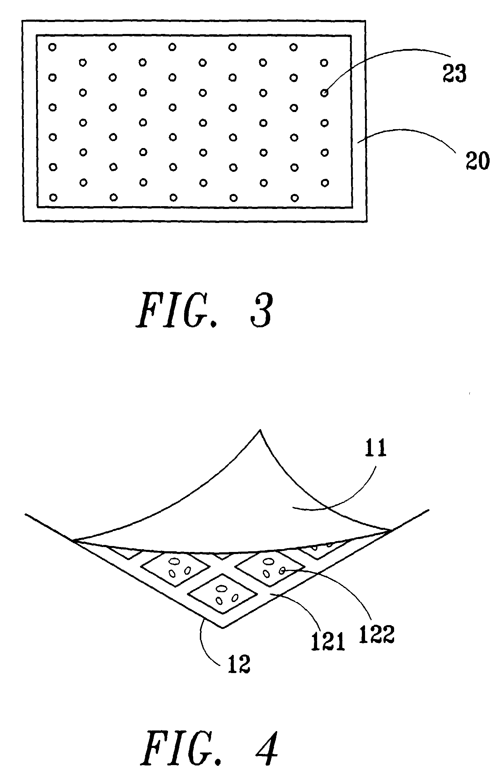

Referring to Figure 1, there is shown an apparatus for the DIY cultivation of plants such as organic vegetables which comprises a seed membrane 10, preferably made of paper, and a cultivating container or box 20. The box 20 is provided with a plurality of holes 21 in its upper, lower and side walls to receive supporting rods 30 (see Figure 2) to allow the boxes 20 to be arranged in a stack to save space. Each cultivating box 20 contains the correct amount of organic soil or organic medium 22 which is overlaid by the seed membrane 10 for growing thereon. Figure 3 is a top view of a cultivating container 20 of the invention provided with a plurality of holes 23 in the bottom thereof for air venting and/or water drainage.

Figure 4 shows in more detail the construction of the preferred membrane 10 of the invention which is prepared by applying adhesive 121 between two paper membranes 11,12 in a net-like manner to provide a plurality of cells. One or more seeds 122 are placed in each cell and the two paper layers 11,12 are then dried and laminated together thereby fixing the seeds 122 in place between the two paper membranes 11,12 by means of the adhesive 121. If required, the adhesive 121 can be replaced or supplemented by organic fertilisers which bond the two paper membranes 11,12 together and retain the seeds 122 in place thereby avoiding the need for any subsequent fertilising procedure.

When planting using the above described apparatus, the paper membrane 10 with the seeds and/or fertilisers adhered thereto is laid directly on the top surface 22 of the organic soil or organic medium. The paper membrane 10 is then wetted sufficiently with water to cause it to dissolve or disintegrate whereupon the seeds and fertilisers therein fall into the soil and the fertiliser in the membrane 10 supplies exactly the right nutrients needed for the seeds to grow. Thus, by simply controlling the water supply, the seeds can grow normally thereby avoiding the inconvenience of having to use separate fertiliser.

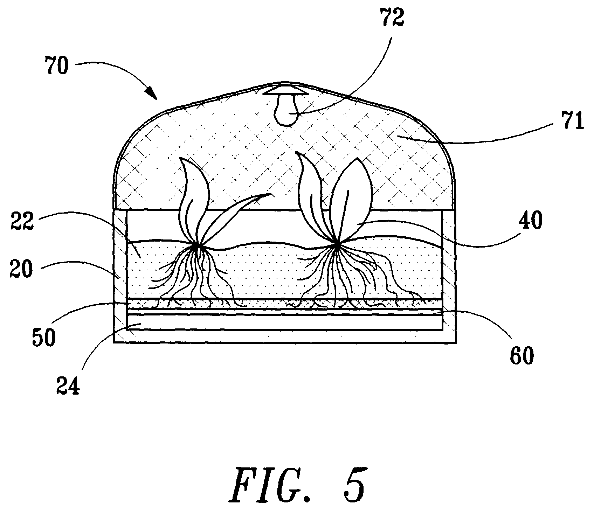

Referring now to Figure 5, the cultivating container 20 can also be provided with a fibre layer 50 beneath the organic soil or organic medium 22. The fibre layer can be in the form of a blanket (woven or non-woven) and can be made of any suitable fibrous material, e.g. cotton. Since roots grow downwardly and continuously as the plant grows, the roots of the plants 40 can develop into a network which adheres strongly to this fibre layer 50 and also penetrates deeply into it to intermingle securely with its fibre structure. Thus, the plants can grow steadily and strongly and they will be resistant to being blown over by wind whereby their normal growth can be promoted to achieve a longer lasting plant. Temperature adjusting means 60 such as an electric heating sheet with a thermostat can be provided beneath the fibre layer 50 which can either be a single large sheet or a number of individual sheets located at several places. The temperature adjusting means 60 is humidity-proof and functions to adjust the temperature to one suitable for the optimum growth of the plants 40 particularly when cultivating plants in cold climatic conditions or in a cold area thereby preventing them from being damaged or killed by frost. In addition, a space 24 can be interposed between the organic soil or organic medium 22 and the bottom of the cultivating container 20 to facilitate air venting and water drainage.

The assembled apparatus can also include a cover 70 made of a line mesh 71 which allows good ventilation and protection against insect damage and also resistance to damage by heavy rain, thereby providing a good growing environment and conditions for the plants. The cover 70 can be foldable for storage purposes. Furthermore, a lamp 72 can be provided inside the cover 70 whose power source can be an alternating current, direct current or solar energy powered. The lamp 72 is used to adjust the temperature to one suitable for the growth of the plants 40 or to accelerate the growth and harvesting thereof. The membrane 10 can be replaced by a water soluble adherent layer laid on the organic soil or organic medium 22, said layer being formed by cooking flour, starch or dextrin into a paste on which the seeds are directly placed and retained.

From the foregoing, it will be appreciated that the invention provides a preferred apparatus for the DIY cultivation of plants which comprises a seed membrane, prepared by applying adhesives between two membranes, preferably paper, in a net-like manner, placing one or more seed grains in the centre of each cell of the net-like mesh and laminating and drying said two membranes together with said adhesive thereby fixing said seeds in place, and a cultivating container with organic soil or growing medium therein which is to be overlaid with said membrane for growing thereon, the arrangement being such that when planting, said membrane with the seeds adhered thereon is overlaid on the surface of the soil or growing medium, and is wetted sufficiently with water for it to disintegrate whereby the seeds therein can fall naturally into the soil, and grow normally just be subsequently supplying fertilisers and proper water continuously thereto.

The adhesives in said seed membrane can be replaced by organic fertilisers which laminate the two paper membranes together to fix the seeds in place so that the subsequent fertilising procedure can be omitted.

Several different types of seeds can be fixed in said seed membrane.

## Claims

1. A plant growing medium characterised by a water soluble layer to which a plurality of seeds is attached

2. A plant growing medium as claimed in claim 1 characterised in that the layer is an adherent layer made of flour, starch or dextrin.

3. A plant growing medium as claimed in claim 1 characterised in that the layer (12) has retaning means (121) thereon.

4. A plant growing medium as claimed in claim 3 characterised in that a second layer (11) is attached to the first layer (12) by the retaining means (121) to encapsulate the seeds (122) between the two layers (11, 12).

5. A plant growing medium as claimed in claim 4 characterised in that the retaining means (121) is arranged on the first layer (12) in a matrix providing a plurality of individual cells, one or more seeds being located in each cell.

6. A plant growing medium as claimed in any of claims 3 to 5 characterised in that the or each layer (11,12) is paper.

7. A plant growing medium as claimed in any of claims 3 to 6 characterised in that the retaining means (121) is an adhesive.

8. A plant growing medium as claimed in any of claims 3 to 6 characterised in that the retaming means is an organic fertiliser.

9. Apparatus for growing plants comprising an open-topped cultivation container (20) in combination with the plant growing medium (10) as claimed in any of claims 1-8.

10. Apparatus as claimed in claim 9 characterised in that the container (20) has a plurality of holes (21) therein to receive supporting rods (30) to allow a plurality of containers (20) to be assembled in a stack with each container spaced from an adjacent container.

11. Apparatus as claimed in claim 9 or claim 10 characterised in that a plurality of vent or drain holes (23) are provided in the bottom of the container.

12. Apparatus as claimed in any of claims 9 to 11 characterised by temperature adjusting means (60) in the container.

13. Apparatus as claimed in any of claims 9 to 12 characterised in that each container (20) includes means which, in use, separate the growing medium in the container (20) from the bottom thereof thereby providing an air or venting space (24) therebetween.

14. Apparatus as claimed in any of claims 9 to 13 characterised by a layer (50) of fibrous material positioned, in use, in the container (20) beneath the growing medium therein.

15. Apparatus as claimed in any of claims 9 to 14 characterised by a cover (70) made of a mesh material which fits over the container (20).

16. Apparatus as claimed in claim 15 characterised by a lamp (72) is provided inside the cover (70) which, in use, varies the temperature inside said cover.

17. A method for the DIY cultivation of organic vegetables characterised by filling a cultivation container with an organic growing medium and placing a water soluble membrane with seeds attached thereto on the top surface of said growing medium, wetting the membrane sufficiently with water for it to disintegrate whereby the seeds drop into the organic growing medium to grow normally by subsequently just watering continuously.
